# EUROPEAN PATENT SPECIFICATION

(11) **EP 3 953 415 B1**
(45) Date of publication and mention of the grant of the patent: **22.03.2023**
(21) Application number: 20715415.4
(22) Date of filing: 07.04.2020
(51) Int. Cl.: C08J 3/22, C08K 3/22, C08K 7/14, C08L 23/04, C08L 77/00

(54) **YELLOW PIGMENT COMPOSITION**
GELBE PIGMENTZUSAMMENSETZUNG
COMPOSITION DE PIGMENT JAUNE

(30) Priority: 11.04.2019 EP 19168703
(43) Date of publication of application: 16.02.2022
(73) Proprietor: BASF SE, 67056 Ludwigshafen am Rhein (DE)
(72) Inventor: SPIES, Patrick, 67056 Ludwigshafen (DE); ERDMANN, Torsten, 07407 Rudolstadt (DE)
(74) Representative: BASF IP Association
(86) International application number: PCT/EP2020/059900
(87) International publication number: WO 2020/208021

(56) References cited:
- EP-A1- 3 181 643
- US-B1- 6 458 197

## Description

The invention relates to a yellow pigment composition, its use as colorant in thermoplastic polymer compositions, corresponding thermoplastic molding compositions, their use for forming fibers, foils or moldings, and the respective fibers, foils or moldings.

For giving thermoplastic molding compositions, a yellow color, inorganic and/or organic pigments can be employed. One example of an organic yellow pigment is the monoazo-ca-pigment BAYPLAST^{®} Yellow G Gran. Bismuth vanadate, an inorganic yellow pigment, is often employed in the form of a bismuth vanadate masterbatch which is stabilized against thermal degradation by adding boric acid. Typical commercial bismuth vanadate pigments are encapsulated in silicate or alumina. This encapsulation does not provide sufficient stability against thermal degradation, especially in polyamide molding composition intended for injection molding.

Since boric acid should preferably no longer be employed in thermoplastic molding compositions, there is need for an alternative bismuth vanadate masterbatch which is stable against thermal degradation of the pigment. Simply leaving out the boric acid has not been successful, since thermal degradation was observed after a short time.

EP 3 181 643 A1 discloses a coated bismuth oxy halide-based pigment having a coating comprising an anti-oxidant and a masterbatch in which the coated bismuth oxy halide pigment is premixed with a modified poly(ethylene/acrylic acid) copolymer at 60% pigment loading. A masterbatch is diluted with polyamide-6. It is stated that the bismuth oxy halide-based pigment to be coated with the antioxidant may be mixed with bismuth vanadate.

US 6,458,197 B1 discloses a pigment comprising bismuth vanadate coated with a plurality of layers of inorganic compounds, wherein the last layer comprises boron and zinc. There is no disclosure of a pigment composition comprising the bismuth vanadate pigment dispersed in a polymer.

The object underlying the present invention is to provide a bismuth vanadate pigment composition which can be employed as masterbatch for coloring thermoplastic molding compositions, specifically polyamide containing thermoplastic molding compositions which do not contain boric acid or boron compounds and are stabilized against thermal degradation.

The object is achieved according to the present invention by a pigment composition C, comprising bismuth vanadate pigment dispersed in a copolymer of ethylene with at least one comonomer, selected from the group consisting of (meth)acrylic acid, C₁₋₁₂-alkyl (meth)acrylates and maleic anhydride.

According to the present invention, it has been found that bismuth vanadate pigments can be stably dispersed in a copolymer of ethylene with at least one comonomer, selected from the group consisting of (meth)acrylic acid, C₁₋₁₂-alkyl (meth)acrylates and maleic anhydride, and the resulting pigment composition is stable against thermal degradation upon storage, upon inclusion in thermoplastic polymers and upon processing of the thermoplastic polymer, e.g. to yield moldings by injection molding.

Simply leaving out the boric acid in the known bismuth vanadate masterbatches was not successful, since the bismuth vanadate pigment rapidly underwent thermal degradation.

Employing the bismuth vanadate pigments in a polyethylene masterbatch also was not sufficient to prevent thermal degradation.

Only the inclusion or dispersion in an ethylene copolymer, having organic acid groups, selected from acrylic acid, acrylate or maleic anhydride groups, lead to bismuth vanadate masterbatches having the desired thermal stability. According to the present invention, it was especially found that by adding a maleic anhydride containing ethylene copolymer, the color stability of the bismuth vanadate pigment could be significantly improved. Preferably, a masterbatch is prepared from the bismuth vanadate pigment and the copolymer, which is subsequently employed as colorant when compounding or injection molding thermoplastic molding compositions. It is possible as well to include the bismuth vanadate pigments and the copolymer as separate compounds directly in the compounding in order to prepare the pigment composition or the thermoplastic molding composition.

Bismuth vanadate is an inorganic compound with the formula BiVO₄. It is a bright yellow solid being a representative of complex inorganic colored pigments (CICPs). More specifically, bismuth vanadate is a mixed-metal oxide. Bismuth vanadate is also known under the Colour Index^{®} International as C.I. Pigment Yellow 184. When used as a pigment it contains a high chroma and excellent hiding power. In nature, bismuth vanadate can be found as the mineral pucherite, clinobisvanite, and dreyerite depending on the particular polymorph formed.

Bismuth vanadate pigments are typically based on pure bismuth vanadate with monoclinic (clinobisvanite) or tetragonal (dreyerite) structure. They can be formed from a series of pH controlled precipitation reactions (it is important to note these reactions can be carried out with or without the presence of molybdenum depending on the desired final phase). It is also possible to start with the parent oxides (Bi₂O₃ and V₂O₅) and perform a high temperature calcination to achieve a pure product.

Bismuth vanadate pigments can be coated with aluminium and/or silica.

The pigment composition of the present invention comprises bismuth vanadate pigment dispersed in a copolymer of ethylene with at least one comonomer, selected from the group consisting of (meth)acrylic acid, C₁₋₁₂-alkyl (meth)acrylates and maleic anhydride, wherein the pigment composition comprises 5 to 60 wt%, preferably 10 to 50 wt%, more preferably 20 to 40 wt% of bismuth vanadate, as component C1, 5 to 60 wt%, preferably 10 to 50 wt%, more preferably 20 to 40 wt% of the copolymer of ethylene with at least one comonomer selected from the group consisting of (meth)acrylic acid, C₁₋₁₂-alkyl (meth)acrylates and maleic anhydride, as component C2, 10 to 70 wt%, preferably 20 to 60 wt%, more preferably 30 to 50 wt% of polyethylene, polypropylene or copolymers of ethylene and at least one C₃₋₁₂-olefin as comonomer, the copolymers being different from component C2, as component C3, 0 to 10 wt%, preferably 0 to 5 wt%, more preferably 0 to 2 wt% of further ingredients, as component C4, wherein the total amount of components C1 to C4 is 100 wt%.

Typical pigment compositions according to the present invention comprise the bismuth vanadate in an amount of 5 to 60 wt%, more preferably 10 to 50 wt%, most preferably 20 to 40 wt%, based on the amount of the total pigment composition.

The amount of the copolymer is likewise 5 to 60 wt%, more preferably 10 to 50 wt%, most preferably 20 to 40 wt%.

The copolymer preferably contains 50 to 97 wt%, more preferably 60 to 95 wt%, most preferably 70 to 90 wt% of ethylene, based on the total amount of the copolymer. The comonomer is preferably acrylic acid, C₁₋₆-alkyl acrylate, maleic anhydride or a mixture thereof.

It is particularly preferable to use copolymers of ethylene and acrylates, acrylic acid and maleic anhydride. Specifically, it is preferred to use copolymers of ethylene, n-butyl acrylate, acrylic acid and maleic anhydrides. An appropriate copolymer is obtainable as Lupolen^{®} KR 1270 from BASF SE. This copolymer is typically employed in polyamide compositions as an impact-modifying polymer, see for example US 8,629,206 B2 and US 2016/0130381 A1.

The copolymer containing the carboxylic acid groups can be used alone for preparing the pigment composition of the present invention. In this case, the pigment composition consists of the bismuth vanadate pigment and the acid group-containing copolymer as matrix polymer.

It is also possible to add an additional polymer, preferably a polyolefin, to the pigment composition. The polyolefin can preferably be polyethylene, polypropylene or a copolymer of ethylene and at least one C₃₋₁₂-olefin as comonomer. This copolymer should be different from the above copolymer containing carboxylic acid groups. Preferably, this additional polymer is free from (meth)acrylic acid, C₁₋₁₂-alkyl (meth)acrylate and maleic anhydride comonomers.

Due to the polyolefinic character, this additional (co)polymer can be homogeneously admixed with the above copolymer. The preferred of these additional polyolefins is polyethylene, polypropylene or an ethylene/propylene copolymer. Most preferred is polyethylene.

The mass ratio of this polyolefin to the above copolymer is preferably in the range of from 3:1 to 1:3, more preferably 2:1 to 1:2, most preferably 1:1 to 5:3.

The pigment composition C comprises
5 to 60 wt%, preferably 10 to 50 wt%, more preferably 20 to 40 wt% of bismuth vanadate, as component C1,
5 to 60 wt%, preferably 10 to 50 wt%, more preferably 20 to 40 wt% of the copolymer of ethylene with at least one comonomer selected from the group consisting of (meth)acrylic acid, C₁₋₁₂-alkyl (meth)acrylates and maleic anhydride, as component C2,
10 to 70 wt%, preferably 20 to 60 wt%, more preferably 30 to 50 wt% of polyethylene, polypropylene or copolymers of ethylene, and at least one C₃₋₁₂-olefin as comonomer, the copolymers being different from component C2, as component C3,
0 to 10 wt%, preferably 0 to 5 wt%, more preferably 0 to 2 wt% of further ingredients, as component C4,
wherein the total amount of components C1 to C4 is 100 wt%.

Further ingredients C4 can be further colorants, for example organic pigments, specifically yellow organic pigments, like BAYPLAST^{®} Yellow G. Additional further ingredients can be the usually employed adjuvants.

The pigment composition C can be used as colorant in thermoplastic polymer compositions. These thermoplastic polymer compositions can be based on the typical thermoplastic polymers which can be injection-molded. Preferably, the thermoplastic polymer contains at least one polyamide. More preferably, in the thermoplastic polymer composition, the major part of the polymers is polyamide, specifically aliphatic polyamide.

A preferred thermoplastic molding composition comprises a thermoplastic polymer and a pigment composition in an amount leading to a bismuth vanadate content of the thermoplastic molding composition in the range of from 0.1 to 2.0 wt%, preferably 0.2 to 1.0 wt%, more preferably 0.3 to 0.5 wt%.

The polymer in which the pigment composition is included can be selected from any desired suitable polymers. By way of example, it involves a polyamide, polyester, polycarbonate, polyether, polyurethane, polysulfone, polyolefin, or a polymer blend made of two or more thereof.

The invention also relates to a thermoplastic molding composition, comprising
30 to 95 wt% of at least one, for example aliphatic, polyamide or copolyamide, as component A,
0 to 50 wt% of the glass fibers, as component B,
0.2 to 7 wt% of a pigment composition as defined above, as component C,
0 to 2 wt% of at least one organic pigment, as component D,
0 to 50 wt% of further additives, as component E,
wherein the total amount of components A to E is 100 wt%.

This thermoplastic molding composition preferably has a bismuth vanadate content of 0.1 to 2.0 wt%, more preferably 0.2 to 1.0 wt%, most preferably 0.3 to 0.5 wt%.

It is particularly preferable that component A involves a polyamide or copolyamide being present in an amount of from 30 to 95%, preferably 40 to 89.5%, more preferably 26 to 74 wt%.

The polyamides preferably used in the invention are produced via reaction of starting monomers selected by way of example from dicarboxylic acids and from diamines or from salts of the dicarboxylic acids and diamines, from aminocarboxylic acids, from aminonitriles, from lactams, and from mixtures thereof. Starting monomers of any desired aliphatic polyamides can be involved here. The polyamides can be amorphous, crystalline, or semicrystalline. The polyamides can moreover have any desired suitable viscosities and, respectively, molecular weights. Particularly suitable polyamides have aliphatic, semicrystalline, or semiaromatic, or else amorphous, structure of any type.

The intrinsic viscosity of these polyamides is generally from 90 to 350 ml/g, preferably from 110 to 240 ml/g, determined in a 0.5% by weight solution in 96% by weight sulfuric acid at 25°C to ISO 307.

Semicrystalline or amorphous resins with molecular weight (weight average) of at least 5000 are preferred, these being described by way of example in the following U.S. patent numbers 2,071,250, 2,071,251, 2,130,523, 2,130,948, 2,241,322, 2,312,966, 2,512,606 and 3,393,210. Examples of these are polyamides which derive from lactams having from 7 to 11 ring members, e.g. polycaprolactam and polycapryllactam, and also polyamides which are obtained via reaction of dicarboxylic acids with diamines.

Dicarboxylic acids that can be used are alkanedicarboxylic acids having from 6 to 12, in particular from 6 to 10, carbon atoms, and aromatic dicarboxylic acids. Mention may be made here of the following acids: adipic acid, azelaic acid, sebacic acid, and dodecanedioic acid (= decanedicarboxylic acid).

Particularly suitable diamines are alkanediamines having from 2 to 12, in particular from 6 to 8, carbon atoms, and also di(4-aminocyclohexyl)methane or 2,2-di(4-aminocyclohexyl)propane.

Preferred polyamides and copolyamides are aliphatic.

Preferred polyamides are polyhexamethyleneadipamide (PA 66) and polyhexamethylenesebacamide (PA 610), polycaprolactam (PA 6), and also nylon-6/6,6 copolyamides, in particular having a proportion of from 5 to 95 wt% of caprolactam units. Particular preference is given to PA 6, PA 66, and nylon-6/6,6 copolyamides.

Mention may also be made of polyamides which are obtainable by way of example via condensation of 1,4-diaminobutane with adipic acid at an elevated temperature (nylon-4,6). Production processes for polyamides having this structure are described by way of example in EP-A 38 094, EP-A 38 582, and EP-A 39 524.

Other examples are polyamides which are obtainable via copolymerization of two or more of the above mentioned monomers, and mixtures of a plurality of polyamides, in any desired mixing ratio.

The following non-exhaustive list comprises the polyamides mentioned, and also other polyamides for the purposes of the invention (the monomers being stated between parentheses):
PA 26 (ethylenediamine, adipic acid)
PA 210 (ethylenediamine, sebacic acid)
PA 46 (tetramethylenediamine, adipic acid)
PA 66 (hexamethylenediamine, adipic acid)
PA 69 (hexamethylenediamine, azelaic acid)
PA 610 (hexamethylenediamine, sebacic acid)
PA 612 (hexamethylenediamine, decanedicarboxylic acid)
PA 613 (hexamethylenediamine, undecanedicarboxylic acid)
PA 1212 (1,12-dodecanediamine, decanedicarboxylic acid)
PA 1313 (1,13-diaminotridecane, undecanedicarboxylic acid)
PA 4 (pyrrolidone)
PA 6 (ε-caprolactam)
PA 7 (ethanolactam)
PA 8 (capryllactam)
PA 9 (9-aminononanoic acid)
PA11 (11-aminoundecanoic acid)
PA 12 (laurolactam).

These polyamides and production thereof are known. Details concerning their production are found by the person skilled in the art in Ullmanns Enzyklopädie der Technischen Chemie [Ullmann's Encyclopedia Of Industrial Chemistry], 4th ed., vol. 19, pp. 39-54, Verlag Chemie, Weinheim, 1980, and also Ullmann's Encyclopedia of Industrial Chemistry, vol. A21, pp. 179-206, VCH Verlag, Weinheim 1992, and also Stoeckhert, Kunststoff Lexikon [Plastics Encyclopedia], pp. 425-428, Hanser Verlag, Munich 1992 (keyword "Polyamide" [Polyamides] ff.).

It is particularly preferable to use nylon-6 or nylon-6,6.

It is moreover possible in the invention to provide functionalizing compounds in the polyamides, where these are capable of linkage to carboxy or amino groups and by way of example have at least one carboxy, hydroxy, or amino group. These are preferably monomers having branching effect, where these by way of example have at least three carboxy or amino groups, monomers capable of linkage to carboxy or amino groups, e.g. via epoxy, hydroxy, isocyanato, amino, and/or carboxy groups, and which have functional groups selected from hydroxy groups, ether groups, ester groups, amide groups, imine groups, imide groups, halogen groups, cyano groups, and nitro groups, C-C double bonds, or C-C triple bonds, or polymer blocks capable of linkage to carboxy or amino groups.

Use of the functionalizing compounds can adjust the property profile of the resultant polyamides as desired within a wide range.

By way of example, triacetonediamine compounds can be used as functionalizing monomers. These preferably involve 4-amino-2,2,6,6-tetramethylpiperidine or 4-amino-1-alkyl-2,2,6,6-tetramethylpiperidine, where the alkyl group in these has from 1 to 18 carbon atoms or has been replaced by a benzyl group. The amount present of the triacetonediamine compound is preferably from 0.03 to 0.8 mol %, particularly preferably from 0.06 to 0.4 mol %, based in each case on 1 mol of amide groups of the polyamide. Reference can be made to DE-A-44 13 177 for further details.

As component B, the thermoplastic molding compositions can contain glass fibers. If present, the amount of glass fibers is preferably 5 to 50 wt%, more preferably 10 to 40 wt%, most preferably 25 to 35 wt%. It is possible to use any desired suitable glass fibers in the form of chopped glass or in the form of rovings. It is preferable that the diameter of the chopped glass fibers is about 10 µm. The glass fibers can have been surface-treated, for example, silanized. Concomitant use of the glass fibers is particularly advantageous.

Component C is as described above. The amount of component C is preferably 0.3 to 5.0 wt%, more preferably 0.5 to 2.0 wt%.

If component D is present, it is preferably used in an amount of from 0.1 to 2.0 wt%, more preferably 0.2 to 1.0 wt%, most preferably 0.3 to 0.5 wt%, based on the total amount of components A to E. The at least one organic pigment preferably is at least one yellow organic pigment. If such pigment is already part of component C, e.g. as component C4, component D is not present.

The thermoplastic molding compositions of the invention can comprise, as component E, from 0 to 50 wt%, preferably 0 to 30 wt%, more preferably 0 to 20 wt% of further additives. Said additives can involve other fillers, stabilizers, oxidation retarders, agents providing protection from decomposition by heat and decomposition by ultraviolet light, flame retardants, lubricants and mold-release agents, colorants such as dyes and pigments, nucleating agents, plasticizers, etc. For a more detailed description of possible additives, reference can be made to pages 31 to 37 of WO 2008/074687.

It is most preferable that from 0.1 to 20 wt% of component E is present (the amount of component A being correspondingly reduced), where component E comprises stabilizers and lubricants. By way of example, zinc oxide can be used as stabilizer, and calcium stearate can be used as lubricant. Conventional antioxidants for polyamide molding compositions can be used, for example the antioxidants marketed with trademark Irganox^{®} by BASF SE.

Phosphorus-containing organic polymers can be used alone or in combination with other flame-retardant substances and synergists as (part of) component E.

Other flame-retardant substances can by way of example be red phosphorus, cyclic phenoxy-phosphazenes having at least phenoxyphosphazene units, or (di)phosphinate salts.

It is moreover also possible to use reaction products of melamine with a phosphoric acid, or to use metal borates.

Preferred reaction products of melamine with a phosphoric acid are products which are obtained through reaction of in essence equimolar amounts of melamine or of a condensate of melamine with phosphoric acid, pyrophosphoric acid, or polyphosphoric acid by suitable processes. It is particularly preferable to use melamine polyphosphate, which can be obtained through condensation of melamine phosphate by heating under nitrogen. The general formula of melamine polyphosphate is (C₃H₆N₆HPO₃)*ₙ*.

The phosphorus acid component in the melamine phosphate is by way of example ortho-phosphoric acid, phosphorous acid, hypophosphorous acid, metaphosphoric acid, pyrophosphoric acid, triphosphoric acid, or tetraphosphoric acid. Particular preference is given to melamine polyphosphate which is obtained through condensation of an adduct of ortho-phosphoric acid or pyrophosphoric acid with melamine. The degree of condensation of the melamine polyphosphate is preferably 5 or greater. Alternatively, the melamine polyphosphate can also be an equimolar adduct salt of polyphosphoric acids with melamine. It is also possible to use cyclic polymetaphosphoric acid, alongside non-cyclic polyphosphoric acid. The adduct salt of melamine polyphosphate is generally a powder which is obtained through reaction of an aqueous slurry of a mixture of melamine with polyphosphoric acid and subsequent isolation by filtration, washing, and drying. The grain size of the melamine polyphosphate can be adjusted within wide limits, and in this connection reference can also be made to EP-A-2 100 919, paragraph [0026].

Suitable phosphinate salts have the general formula [R¹R²P(=O)-O]⁻ₘM^{m+}. Suitable (di)phosphinates have the general formula [O-P(=O)R¹-O-R³-O-P(=O)R²-O]²⁻ₙMₓ^{m+}, where R¹ and R² are mutually independently linear or branched C₁₋₆-alkyl moieties or C₆₋₁₀-aryl moieties, R³ is a linear or branched C₁₋₁₀-alkylene moiety, C₆₋₁₀-arylene moiety, C₇₋₁₀-alkyl arylene moiety, or C₇₋₁₀-aryl-alkylene moiety, M is Ca, Mg, Al, or Zn, m is the valency of M, determined from 2n = mx, n is the value 1 or 3, and x is the value 1 or 2. If the value of m or n is 2 or more, the moieties R¹ to R³ can be selected freely at each position.

Examples of suitable phosphinic salts are dimethylphosphinate, ethylmethylphosphinate, diethylphosphinate, methyl-n-propylphosphinate, methanedi(methylphosphinate), benzene-1,4-di(methylphosphinate), methylphenylphosphinate, and diphenylphosphinate. The metal component M is a calcium ion, magnesium ion, aluminum ion, or zinc ion.

Examples of suitable phosphinate salts are calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

Examples of suitable diphosphinate salts are calcium methanedi(methylphosphinate), magnesium methanedi(methylphosphinate), aluminum methanedi(methylphosphinate), zinc methane-di(methylphosphinate), calcium benzene-1,4-di(methylphosphinate), magnesium benzene-1,4-di(methylphosphinate), aluminum benzene-1,4-di(methylphosphinate), and zinc benzene-1,4-di(methylphosphinate).

It is particularly preferable to use phosphinate salts, in particular aluminum ethylmethylphosphinate, aluminum diethylphosphinate, and zinc diethylphosphinate. It is particularly preferable to use aluminum diethylphosphinate.

The (di)phosphinate salts can be used in any desired suitable grain size, see EP-A-2 100 919, paragraph [0032].

It is also possible that, alongside or as alternative to the above flame retardants, other flame retardants are also used concomitantly as additives of component E, for example those based on triazines, on metal hydrates, and on silicones. A typical flame-retardant substance based on triazines is melamine cyanurate.

Other additional flame-retardant substances can be metal compounds such as magnesium hydroxide, aluminum hydroxide, zinc sulfate, iron oxide, and boron oxide, see also EP-A-2 100 919, paragraphs [0046] to [0048].

Other flame-retardant substances having synergistic effect are mentioned by way of example in paragraphs [0064] and [0065] in US 2010/0261818.

The thermoplastic molding composition can comprise at least one impact-modifying polymer as component E.

Component E used comprises from 0 to 20 wt%, preferably from 0 to 10 wt%, in particular from 0 to 8 wt%, of at least one impact-modifying polymer different from the copolymer of component C. If an impact-modifying polymer is present, the minimum amount is 0.1 wt%, preferably 1 wt%, in particular 3 wt%. The maximum possible amount of component A decreases correspondingly, so that the entire amount of components A to E gives 100 wt%. Concomitant use of component E is not essential, but use thereof can improve the impact-resistance capability of the resultant polyamide molding compositions. Impact-modifying polymers involved here are those that are typically used for impact-modification of the polyamides of component A. It is preferable that an elastomer is involved, examples being natural or synthetic rubbers and other elastomers.

Synthetic rubbers that may be mentioned and that can be used are ethylene-propylene-diene rubber (EPDM), styrene-butadiene rubber (SBR), butadiene rubber (BR), nitrile rubber (NBR), hydrin rubber (ECO), and acrylate rubbers (ASA). It is also possible to use silicone rubbers, polyoxyalkylene rubbers, and other rubbers.

The following may be mentioned as thermoplastic elastomers: thermoplastic polyurethane (TPU), styrene-butadiene-styrene block copolymers (SBS), styrene-isoprene-styrene block copolymers (SIS), styrene-ethylene-butylene-styrene block copolymers (SEBS), and styrene-ethylene-propylene-styrene block copolymers (SEPS).

Resins can moreover be used as blend polymers, for example urethane resins, acrylic resins, fluoro resins, silicone resins, imide resins, amide-imide resins, epoxy resins, urea resins, alkyd resins, or melamine resin.

Ethylene copolymers can moreover be used as blend polymer, examples being copolymers of ethylene and 1-octene, 1-butene, or propylene, these being as described in WO 2008/074687. The molar masses of ethylene-a-olefin copolymers of the abovementioned type are preferably in the range from 10000 to 500000 g/mol, preferably from 15000 to 400000 g/mol (number-average molar mass). It is also possible to use straight polyolefins, such as polyethylene or polypropylene.

The further additives are compounds or materials that do not form part of the other components A to D. Thus, if for example a polyolefin is employed in component C, no such polymer can form part of component E. If, however, component C does not contain polyolefin without carboxylic groups, such polymers can form part of component E. Thus, the different components A to E as well as C1 to C4 are mutually exclusive.

For suitable polyurethanes, reference can be made to EP-B-1 984 438, DE-A-10 2006 045 869 and EP-A-2 223 904.

Other suitable thermoplastic resins are listed in paragraph [0028] of JP-A-2009-155436.

Other polymers suitable as component E are mentioned in paragraph [0044] in EP-A-2 100 919. 0119].

Other fillers that can be used as (part of) component E are carbon fibers, aromatic polyamide fibers, and other fillers such as gypsum fibers, synthetic calcium silicates, kaolin, calcined kaolin, wollastonite, talc powder, and chalk.

The molding compositions of the invention are produced by mixing of components A to E. Extruders, such as single- or twin-screw extruders, or other conventional plastifying devices, such as Brabender mixers or Banbury mixers, are advantageously used for this purpose.

The sequence of mixing of the individual components here can be selected freely.

The molding compositions of the invention feature improved flame retardancy, combined with improved tensile strain at break and Charpy impact resistance. They are suitable for the production of moldings, fibers, or foils.

The invention also provides corresponding moldings, fibers, or foils made of the thermoplastic molding composition described above.

The examples below provide further explanation of the invention.

### Examples

First, a pigment masterbatch was prepared. The masterbatch was prepared on a twin screw extruder at a temperature of 220°C. The color values were obtained by using a colorimeter or spectrophotomer.

**Table 1**

| Example | | Comp. C1 | Comp. 1 |
|---|---|---|---|
| Color value | DL* | 0.79 | 0.99 |
| Color value | Da* | -0.05 | 0.04 |
| Color value | Db* | 0.23 | 065 |
| Polyethylene 420 | LDPE | 60 wt% | 30 wt% |
| Lupolen^{®} KR 1270 | MA-BA_Eth copolmer | - | 30 wt% |
| VANADUR^{®} Plus 9010 | Bismuth vanadate pigment aluminium / silica coated | 40 wt% | 40 wt% |

These masterbatches were employed as colorants in glass fiber-reinforced polyamide 6 molding compositions. The respective results are shown in Table 2.

All weights are wt%.

**Table 2**

| Example | | C1 | 1 | C2 | C3 |
|---|---|---|---|---|---|
| Color value | DL* | 0.00 | -0.1 | -5.3 | -4.0 |
| Color value | Da* | 0.00 | 0.1 | 0.2 | 0.3 |
| Color value | Db* | 0.00 | 0.3 | -4.3 | -3.2 |
| Ultramid^{®} B27 | PA6; BASF SE | 63.45 | 63.45 | 64.15 | 64.15 |
| Glass fiber PA-3B-1110 | | 33.0 | 33.0 | 33.0 | 33.0 |
| VANADUR^{®} Plus 9010 | Bismuth vanadate pigment aluminium / silica coated | | | 0.48 | |
| Granular zinc stearate | | 0.2000 | 0.2000 | 0.2 | 0.2 |
| IRGANOX^{®} 1098 powder | | 0.2500 | 0.2500 | 0.2500 | 0.2500 |
| SACHTOLITH HD-S | zinc sulfide | 1.4469 | 1.4469 | 1.4872 | 1.4872 |
| Eupolen^{®} PE Yellow 11-6005 | bismuth vanadate, stabilized with boric acid, 40 wt% in polyethylene | 1.2000 | 0 | 0 | 0 |
| Comp. 1 | | 0 | 1.2000 | 0 | 0 |
| Comp. C1 | | 0 | 0 | 0 | 1.200 |
| Amaplast^{®} Orange YXL | solvent orange 111 | 0.0259 | 0.0259 | 0.0259 | 0.0259 |
| BAYPLAST^{®} Yellow G | organic pigment | 0.4272 | 0.4272 | 0.4069 | 0.4069 |

## Claims

1. Pigment composition, comprising bismuth vanadate pigment dispersed in a copolymer of ethylene with at least one comonomer, selected from the group consisting of (meth)acrylic acid, C₁₋₁₂-alkyl (meth)acrylates and maleic anhydride, wherein the pigment composition comprises
5 to 60 wt%, preferably 10 to 50 wt%, more preferably 20 to 40 wt% of bismuth vanadate, as component C1,
5 to 60 wt%, preferably 10 to 50 wt%, more preferably 20 to 40 wt% of the copolymer of ethylene with at least one comonomer selected from the group consisting of (meth)acrylic acid, C₁₋₁₂-alkyl (meth)acrylates and maleic anhydride, as component C2,
10 to 70 wt%, preferably 20 to 60 wt%, more preferably 30 to 50 wt% of polyethylene, polypropylene or copolymers of ethylene and at least one C₃₋₁₂-olefin as comonomer, the copolymers being different from component C2, as component C3,
0 to 10 wt%, preferably 0 to 5 wt%, more preferably 0 to 2 wt% of further ingredients, as component C4,
wherein the total amount of components C1 to C4 is 100 wt%.

2. Composition according to claim 1, wherein the copolymer of ethylene with at least one comonomer selected from the group consisting of (meth)acrylic acid, C₁₋₁₂-alkyl (meth)acrylates and maleic anhydride is a copolymer of ethylene, C₂₋₆-alkyl acrylate, acrylic acid and maleic anhydride.

3. The composition according to one of claims 1 or 2, wherein the composition is free from boric acid and preferably free from boron compounds.

4. The use of a pigment composition according to one of claims 1 to 3 as colorant in thermoplastic polymer compositions, which preferably contain at least one polyamide.

5. Thermoplastic molding composition, comprising a thermoplastic polymer and a pigment composition as claimed in one of claims 1 to 3 in an amount leading to an bismuth vanadate content of the thermoplastic molding composition in the range of from 0.1 to 2.0 wt%, preferably 0.2 to 1.0 wt%, more preferably 0.3 to 0.5 wt%.

6. Thermoplastic molding composition, comprising
30 to 95 wt% of at least one polyamide or copolyamide, as component A,
0 to 50 wt% of the glass fibers, as component B,
0.2 to 7 wt% of a pigment composition as claimed in one of claims 1 to 3, as component C,
0 to 2 wt% of at least one organic pigment, as component D,
0 to 50 wt% of further additives, as component E,
wherein the total amount of components A to E is 100 wt%.

7. Molding composition according to claim 6, having a bismuth vanadate content of the thermoplastic molding composition in the range of from 0.1 to 2.0 wt%, preferably 0.2 to 1.0 wt%, more preferably 0.3 to 0.5 wt%.

8. The molding composition according to claim 6 or 7, wherein the composition comprises 0.1 to 2.0 wt% of at least one yellow organic pigment as component D.

9. A process for preparing a pigment composition according to one of claims 1 to 3 or a thermoplastic molding composition according to one of claims 5 to 8, which comprises mixing the ingredients of the compositions.

10. The use of a thermoplastic molding composition according to one of claims 5 to 8 for forming fibers, foils or moldings.

11. A molding, fiber or foil made of the thermoplastic molding composition according to one of claims 5 to 8.

## Patentansprüche

1. Pigmentzusammensetzung, umfassend in einem Copolymer von Ethylen mit mindestens einem Comonomer, das aus der Gruppe bestehend aus (Meth) acrylsäure, C₁₋₁₂-Alkyl (meth) acrylaten und Maleinsäureanhydrid ausgewählt ist, dispergiertes Bismutvanadatpigment, wobei die Pigmentzusammensetzung
5 bis 60 Gew.-%, bevorzugt 10 bis 50 Gew.-%, weiter bevorzugt 20 bis 40 Gew.-%, Bismutvanadat als Komponente C1,
5 bis 60 Gew.-%, bevorzugt 10 bis 50 Gew.-%, weiter bevorzugt 20 bis 40 Gew.-% des Copolymers von Ethylen mit mindestens einem Comonomer, das aus der Gruppe bestehend aus (Meth)acrylsäure, C₁₋₁₂-Alkyl(meth)acrylaten und Maleinsäureanhydrid ausgewählt ist, als Komponente C2,
10 bis 70 Gew.-%, bevorzugt 20 bis 60 Gew.-%, weiter bevorzugt 30 bis 50 Gew.-% Polyethylen, Polypropylen oder Copolymere von Ethylen und mindestens einem C₃₋₁₂-Olefin als Comonomer, wobei die Copolymere von Komponente C2 verschieden sind, als Komponente C3,
0 bis 10 Gew.-%, bevorzugt 0 bis 5 Gew.-%, weiter bevorzugt 0 bis 2 Gew.-%, weitere Bestandteile als Komponente C4
umfasst, wobei die Gesamtmenge der Komponenten C1 bis C4 100 Gew.-% beträgt.

2. Zusammensetzung nach Anspruch 1, wobei es sich bei dem Copolymer von Ethylen mit mindestens einem Comonomer, das aus der Gruppe bestehend aus (Meth) acrylsäure, C₁₋₁₂-Alkyl (meth) acrylaten und Maleinsäureanhydrid ausgewählt ist, um ein Copolymer von Ethylen, C₂₋₆-Alkylacrylat, Acrylsäure und Maleinsäureanhydrid handelt.

3. Zusammensetzung nach Anspruch 1 oder 2, wobei die Zusammensetzung frei von Borsäure und vorzugsweise frei von Borverbindungen ist.

4. Verwendung einer Pigmentzusammensetzung nach einem der Ansprüche 1 bis 3 als Farbmittel in thermoplastischen Polymerzusammensetzungen, die bevorzugt mindestens ein Polyamid enthalten.

5. Thermoplastische Formmasse, umfassend ein thermoplastisches Polymer und eine Pigmentzusammensetzung gemäß einem der Ansprüche 1 bis 3 in einer Menge, die zu einem Bismutvanadatgehalt der thermoplastischen Formmasse im Bereich von 0,1 bis 2,0 Gew.-%, bevorzugt 0,2 bis 1,0 Gew.-%, weiter bevorzugt 0,3 bis 0,5 Gew.-%, führt.

6. Thermoplastische Formmasse, umfassend
30 bis 95 Gew.-% mindestens eines Polyamids oder Copolyamids als Komponente A,
0 bis 50 Gew.-% Glasfasern als Komponente B,
0,2 bis 7 Gew.-% einer Pigmentzusammensetzung gemäß einem der Ansprüche 1 bis 3 als Komponente C,
0 bis 2 Gew.-% mindestens eines organischen Pigments als Komponente D,
0 bis 50 Gew.-% weitere Additive als Komponente E,
wobei die Gesamtmenge der Komponenten A bis E 100 Gew.-% beträgt.

7. Formmasse nach Anspruch 6 mit einem Bismutvanadatgehalt der thermoplastischen Formmasse im Bereich von 0,1 bis 2,0 Gew.-%, bevorzugt 0,2 bis 1,0 Gew.-%, weiter bevorzugt 0,3 bis 0,5 Gew.-%.

8. Formmasse nach Anspruch 6 oder 7, wobei die Masse 0,1 bis 2,0 Gew.-% mindestens eines gelben organischen Pigments als Komponente D umfasst.

9. Verfahren zur Herstellung einer Pigmentzusammensetzung nach einem der Ansprüche 1 bis 3 oder einer thermoplastischen Formmasse nach einem der Ansprüche 5 bis 8, bei dem man die Bestandteile der Zusammensetzungen mischt.

10. Verwendung einer thermoplastischen Formmasse nach einem der Ansprüche 5 bis 8 zum Formen von Fasern, Folien oder Formkörpern.

11. Formkörper, Faser oder Folie aus der thermoplastischen Formmasse nach einem der Ansprüche 5 bis 8.

## Revendications

1. Composition de pigment, comprenant un pigment de vanadate de bismuth dispersé dans un copolymère d'éthylène avec au moins un comonomère, choisi dans le groupe constitué par un acide (méth)acrylique, des (méth) acrylates d'alkyle en C₁₋₁₂ et l'anhydride maléique, la composition de pigment comprenant
5 à 60 % en poids, préférablement 10 à 50 % en poids, plus préférablement 20 à 40 % en poids de vanadate de bismuth, en tant que composant C1,
5 à 60 % en poids, préférablement 10 à 50 % en poids, plus préférablement 20 à 40 % en poids du copolymère d'éthylène avec au moins un comonomère choisi dans le groupe constitué par un acide (méth)acrylique, des (méth) acrylates d'alkyle en C₁₋₁₂ et l'anhydride maléique, en tant que composant C2,
10 à 70 % en poids, préférablement 20 à 60 % en poids, plus préférablement 30 à 50 % en poids de polyéthylène, de polypropylène ou de copolymères d'éthylène et d'au moins une oléfine en C₃₋₁₂ en tant que comonomère, les copolymères étant différents du composant C2, en tant que composant C3,
0 à 10 % en poids, préférablement 0 à 5 % en poids, plus préférablement 0 à 2 % en poids d'autres ingrédients, en tant que composant C4,
la quantité totale de composants C1 à C4 étant de 100 % en poids.

2. Composition selon la revendication 1, le copolymère d'éthylène avec au moins un comonomère choisi dans le groupe constitué par un acide (méth)acrylique, des (méth) acrylates d'alkyle en C₁₋₁₂ et l'anhydride maléique étant un copolymère d'éthylène, d'acrylate d'alkyle en C₂₋₆, d'acide acrylique et d'anhydride maléique.

3. Composition selon l'une des revendications 1 et 2, la composition étant exempte d'acide borique et préférablement exempte de composés du bore.

4. Utilisation d'une composition de pigment selon l'une des revendications 1 à 3 en tant que matière colorante dans des compositions de polymère thermoplastique, qui contiennent préférablement au moins un polyamide.

5. Composition de moulage thermoplastique, comprenant un polymère thermoplastique et une composition de pigment selon l'une des revendications 1 à 3 en une quantité conduisant à une teneur en vanadate de bismuth de la composition de moulage thermoplastique dans la plage allant de 0,1 à 2,0 % en poids, préférablement de 0,2 à 1,0 % en poids, plus préférablement de 0,3 à 0,5 % en poids.

6. Composition de moulage thermoplastique, comprenant
30 à 95 % en poids d'au moins un polyamide ou copolyamide, en tant que composant A,
0 à 50 % en poids des fibres de verre, en tant que composant B,
0,2 à 7 % en poids d'une composition de pigment selon l'une des revendications 1 à 3, en tant que composant C,
0 à 2 % en poids d'au moins un pigment organique, en tant que composant D,
0 à 50 % en poids d'autres additifs, en tant que composant E,
la quantité totale de composants A à E étant de 100 % en poids.

7. Composition de moulage selon la revendication 6, possédant une teneur en vanadate de bismuth de la composition de moulage thermoplastique dans la plage allant de 0,1 à 2,0 % en poids, préférablement de 0,2 à 1,0 % en poids, plus préférablement de 0,3 à 0,5 % en poids.

8. Composition de moulage selon la revendication 6 ou 7, la composition comprenant 0,1 à 2,0 % en poids d'au moins un pigment organique jaune en tant que composant D.

9. Procédé pour la préparation d'une composition de pigment selon l'une des revendications 1 à 3 ou d'une composition de moulage thermoplastique selon l'une des revendications 5 à 8, qui comprend le mélange des ingrédients des compositions.

10. Utilisation d'une composition de moulage thermoplastique selon l'une des revendications 5 à 8 pour la formation de fibres, de feuilles ou de moulages.

11. Moulage, fibre ou feuille composé(e) de la composition de moulage thermoplastique selon l'une des revendications 5 à 8.
